# EUROPÄISCHE PATENTSCHRIFT

(11) **EP 1 792 806 B1**
(45) Veröffentlichungstag und Bekanntmachung des Hinweises auf die Patenterteilung: **18.02.2009**
(21) Anmeldenummer: 06019435.4
(22) Anmeldetag: 18.09.2006
(51) Int. Cl.: B62D 15/02, G01D 5/04, G01D 5/14

(54) **Lenkwinkelsensor**
Steering angle sensor
Détecteur d'angle de braquage

(30) Priorität: 30.11.2005 DE 102005058131
(43) Veröffentlichungstag der Anmeldung: 06.06.2007
(73) Patentinhaber: Valeo Schalter und Sensoren GmbH, 74321 Bietigheim-Bissingen (DE)
(72) Erfinder: Schoepe, Roman, 74321 Bietigheim-Bissingen (DE)
(74) Vertreter: Dreiss, Fuhlendorf, Steimle & Becker

(56) Entgegenhaltungen:
- EP-A1- 1 541 983
- EP-A2- 1 342 646
- DE-A1- 19 962 241

## Beschreibung

Die Erfindung betrifft einen Lenkwinkelsensor, mit einem Träger zur Anordnung eines benachbart zu einem Zahnrad angeordneten Magnetsensors, wobei das Zahnrad einen mehrpoligen Magneten aufweist.

Lenkwinkelsensoren dienen dazu, die Drehwinkellage des Lenkrads eines Kraftfahrzeugs erfassen zu können. Um hierbei eine möglichst hohe Auflösung erzielen zu können, gibt es verschiedene Lösungsansätze. Einer dieser Ansätze sieht vor, dass der Lenkwinkelsensor ein Zahnrad aufweist, das zumindest mittelbar drehgekoppelt ist mit der Lenkwelle des Lenksystems, wobei das Zahnrad einen mehrpoligen Magneten aufweist und wobei die Drehung dieses mehrpoligen Magneten mit Hilfe eines Magnetsensors, auch Hall-Sensor oder Hall-IC genannt, erfasst wird. Die vorliegende Erfindung beschäftigt sich mit der Lagerung eines solchen Zahnrads.

Aus Vorbenutzungen ist es bekannt, ein Zahnrad in Zwischenlage zwischen einem Gehäuse des Lenkwinkelsensors und einer Platine des Lenkwinkelsensors zu bringen, so dass das Zahnrad zwischen diesen Bauteilen in axialer Richtung fixiert ist. Die Führung in radialer Richtung erfolgt durch ringförmige Lagerflächen, die einerseits am Zahnrad und andererseits am Gehäuse des Lenkwinkelsensors angeordnet sind. Um eine exakte Positionierung des in das Zahnrad integrierten Magneten gegenüber dem an der Platine befestigten Magnetsensor zu erreichen, sind die zur Verfügung stehenden Fertigungstoleranzen relativ gering.

Eine weitere Möglichkeit zur Lagerung eines Zahnrads sieht vor, dass das Zahnrad drehfest mit einem Stift verbunden ist, der eine in der Platine ausgebildete Öffnung durchgreift und auf seiner dem Zahnrad abgewandten Seite in ein Gehäuse des Lenkwinkelsensors eingepresst ist. Diese Art der Lagerung erfordert es, dass der Magnetsensor dezentral zur Drehachse des Zahnrads angeordnet werden muss, und dass der Magnet sich ringförmig um den Stift herum erstreckt. Dies ist nicht für alle Anwendungen und für alle Auflösungsvermögen eines Lenkwinkelsensors erwünscht.

Aus der EP 1 342 646 A2 ist ein gattungsgemäßer Lenkwinkelsensor bekannt geworden. Ähnliche Sensoren sind aus der DE 199 62 241 A1 und der EP 1 541 983 A1 bekannt.

Hiervon ausgehend liegt der vorliegenden Erfindung die Aufgabe zu Grunde, einen Lenkwinkelsensor zu schaffen, dessen Zahnradlagerung toleranzunempfindlich ist und möglichst kompakt baut.

Diese Aufgabe wird durch einen Sensor mit den Merkmalen des Anspruchs 1 gelöst.

Mit dem erfindungsgemäßen Lagerelement wird erreicht, dass eine günstige Toleranzkette entsteht. Dies liegt daran, dass das Lagerelement an dem Träger angeordnet ist, also nicht - wie aus dem Stand der Technik bekannt - zwei miteinander nicht verbundene Bauteile genau zueinander positioniert werden müssen. Durch die Überbrückung des Zahnrads wird erreicht, dass auf eine zentrale Drehachse verzichtet werden kann, so dass der Magnetsensor auch im Bereich der Drehachse des Zahnrads angeordnet werden kann. Insgesamt wird ein sehr einfacher und kompakter Aufbau erreicht.

Dabei ist vorgesehen, dass das Lagerelement eine Lagerfläche zur Führung des Zahnrads in radialer Richtung aufweist. Dies hat den Vorteil, dass das Lagerelement auch die Führung des Zahnrads in radialer Richtung gewährleisten kann und dies nicht mit Hilfe des Trägers geschehen muss.

Nach der Erfindung sind der Lagerabschnitt und/oder die Lagerfläche an einem an dem Lagerelement vorgesehenen ringförmigen Steg ausgebildet, der in eine an oder in dem Zahnrad ausgebildete Ringnut eingreift. Diese Art der Lagerung ermöglicht eine in axialer Richtung kompakte Konstruktion, wobei gleichzeitig ein spielfreier Lauf des Zahnrads gewährleistet ist. Der ringförmige Steg des Lagerelements kann sich auch nur über einen begrenzten Winkelbereich erstrecken, wodurch weiterer Bauraum eingespart werden kann und trotzdem eine spielfreie Lagerung des Zahnrads gewährleistet ist.

Nach einer anderen Ausführungsform der Erfindung sind der Lagerabschnitt und/oder die Lagerfläche in einer in dem Lagerelement vorgesehenen Ringnut ausgebildet, in die ein an dem Zahnrad ausgebildeter ringförmiger Steg eingreift. Auch diese Ausführungsform ermöglicht eine in axialer Richtung sehr kompakte und gleichzeitig spielfreie Lagerung des Zahnrads. Bei dieser Ausführungsform muss die in dem Lagerelement vorgesehene Ringnut sich nicht notwendigerweise über einen Winkelbereich von 360° erstrecken; sie kann sich also auch nur über ein Winkelsegment erstrecken. Je größer dieses Winkelsegment ist, desto besser ist die Führung des Zahnrads an dem Lagerelement.

Eine Weiterbildung der Erfindung sieht vor, dass der ringförmige Steg eine sich in radialer Richtung erstreckende Schulter trägt, die einen in einer zweiten axialen Richtung wirkenden Anschlag für das Zahnrad bildet, die zur ersten axialen Richtung entgegengesetzt ist. Diese Schulter kann sich in radialer Richtung nach außen oder nach innen erstrecken und bildet hinsichtlich der axialen Lagerung des Zahnrads das Gegenstück zu dem Lagerabschnitt des Lagerelements, das eine Bewegung des Zahnrads in der ersten axialen Richtung begrenzt. Mit Hilfe der Schulter ist es möglich, das Zahnrad von dem Träger zu beabstanden, so dass sich Träger und Zahnrad nicht berühren. Somit kann ein durch Reibung bedingter Verschleiß in diesem Bereich verhindert werden.

Es ist möglich, dass das Zahnrad auf seiner dem Träger zugewandten Seite einen vorzugsweisen ringförmigen Absatz trägt. Dieser ringförmige Absatz kann eine Lagerfläche bilden, die mit dem Träger zusammenwirkt, so dass der Träger eine Bewegung des Zahnrads in einer zur ersten axialen Richtung entgegengesetzten zweiten axialen Richtung begrenzt.

Vorzugsweise sind der Lagerabschnitt und/oder die Lagerfläche und/oder die Ringnut und/oder der ringförmige Steg und/oder die Schulter und/oder der Absatz aus einem selbstschmierenden Material, insbesondere aus Polytetrafluorethylen (PTFE) gebildet. Dies ermöglicht einen reibungs- und verschleißarmen Lauf des Zahnrades. Vorzugsweise ist das Lagerelement einstückig ausgebildet und als Kunststoffteil im Spritzgussverfahren hergestellt.

Nach einer Weiterbildung der Erfindung ist zur Anordnung des Lagerabschnitts und/oder der Lagerfläche und/oder der Ringnut und/oder des ringförmigen Stegs an dem Lagerelement ein Brückenteil vorgesehen, dass mit zumindest einem seiner Enden an dem Träger befestigt ist. Dieses Brückenteil umgreift das Zahnrad, so dass zumindest die Begrenzung der Bewegung des Zahnrads in einer ersten axialen Richtung gewährleistet ist.

In vorteilhafter Weise sind an den Enden des Brückenteils zylindrische Materialabschnitte vorgesehen. Solche Materialabschnitte ermöglichen die Anordnung von Befestigungselementen, insbesondere von Schrauben und/oder Dübeln und/oder Stiften, die diese Materialabschnitte durchsetzen.

Nach einer besonders bevorzugten Ausführungsform der Erfindung greifen die zylindrischen Materialabschnitte in hohlzylindrische Aufnahmen ein, die in oder an dem Träger vorgesehen sind. Auf diese Weise kann das Lagerelement spielfrei an dem Träger angeordnet und dann mit Hilfe der Befestigungselemente befestigt werden.

Eine weitere Ausführungsform der Erfindung sieht vor, dass das Brückenteil exzentrisch zur Drehachse des Zahnrads angeordnet ist. Auf diese Weise kann Platz geschaffen werden für weitere Bauteile des Lenkwinkelsensors, wie dies weiter unten noch detaillierter beschrieben ist.

Insbesondere ist es möglich, dass das Brückenteil in einer zur Drehebene des Zahnrads parallelen Ebene bogenförmig ausgebildet ist. Durch die Bogenform kann der vorstehend genannte Bauraum für weitere Bauteile weiter vergrößert werden.

Das erfindungsgemäß gelagerte Zahnrad kann mit einem weiteren Zahnrad des Lenkwinkelsensors kämmen, dessen Drehbewegung mit der Lenkwelle eines Kraftfahrzeuglenksystems koppelbar ist, wobei das weitere Zahnrad mit einem Kodierelement zumindest mittelbar drehgekoppelt ist. Durch die Verwendung des mehrpoligen Magneten, dessen Bewegung mit Hilfe des Magnetsensors erfasst wird und durch die Verwendung des Kodierelements, dessen Drehstellung durch einen geeigneten weiteren Sensor ermittelbar ist, kann ein Lenkwinkelsensor mit einer hohen Auflösung geschaffen werden. In dieser Konstellation ist es besonders vorteilhaft für den zur Verfügung stehenden Bauraum, wenn die Bogenform des Brückenteils dem Verlauf des Umfangs des Kodierelements angepasst ist. Auf diese Weise nimmt das Lagerelement einen nur sehr kleinen Bauraum ein.

Der Träger des Lenkwinkelsensors kann als Platine des Lenkwinkelsensors oder als Gehäuse des Lenkwinkelsensors ausgebildet sein.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist. Dabei können die in der Zeichnung gezeigten sowie in den Ansprüchen sowie in der Beschreibung erwähnten Merkmale jeweils einzeln für sich oder in beliebiger Kombination erfindungswesentlich sein. In der Zeichnung zeigen:
- Figur 1: eine perspektivische Ansicht eines erfindungsgemäßen Lenkwinkelsensors in einem Vormontagezustand;
- Figur 2: den Lenkwinkelsensor gemäß Figur 1 in einem Fertigmontagezustand;
- Figur 3: einen Ausschnitt des Lenkwinkelsensors gemäß Figur 1 in einer ersten Ausführungsform; und
- Figur 4: einen Ausschnitt des Lenkwinkelsensors gemäß Figur 1 in einer zweiten Ausführungsform.

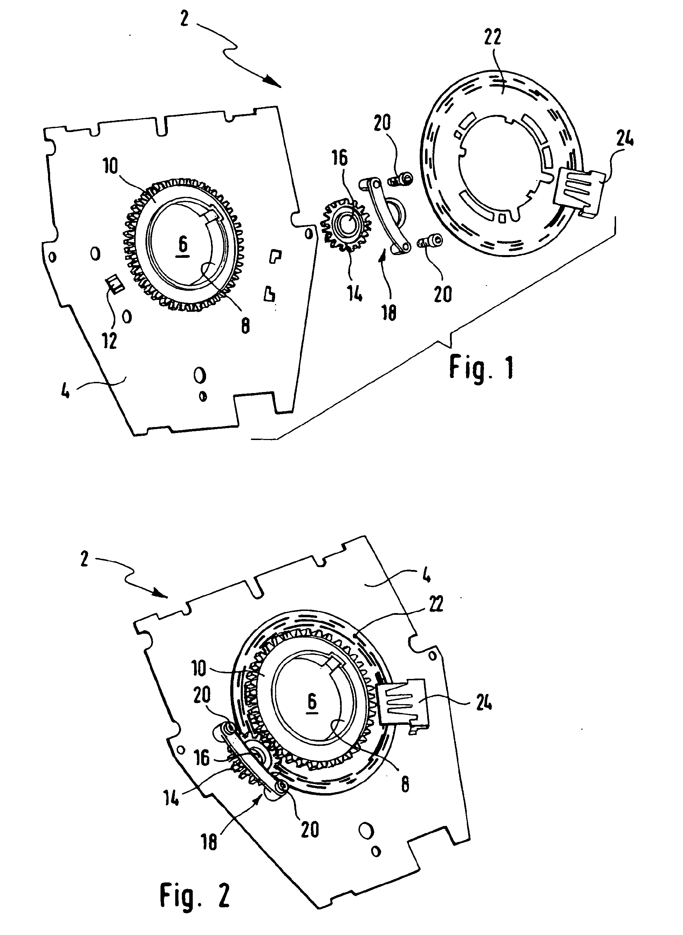

In Figur 1 ist ein Lenkwinkelsensor insgesamt mit dem Bezugszeichen 2 bezeichnet. Dieser weist einen als Platine (PCB, Printed Circuit Board) ausgebildeten Träger 4 auf. In dem Träger 4 ist ein Durchbruch 6 ausgebildet, an dem eine Lagerschale 8 angeordnet ist. Diese dient zur Lagerung eines weiteren Zahnrads 10. Benachbart zu dem weiteren Zahnrad 10 ist ein Magnetsensor 12 auf dem Träger 4 angeordnet.

Der Lenkwinkelsensor 2 weist ferner ein Zahnrad 14 auf, in dessen Zentrum ein mehrpoliger Magnet 16 angeordnet ist. Die Drehbewegung des Magneten 16 kann mit Hilfe des Magnetsensors 12 erfasst werden.

Die Lagerung des Zahnrads 14 erfolgt mit Hilfe eines insgesamt mit 18 bezeichneten Lagerelements, das mit zwei als Schrauben ausgebildeten Befestigungselementen 20 an dem Träger 4 befestigbar ist.

Der Lenkwinkelsensor 2 weist ferner ein ringscheibenförmiges Kodierelement 22 auf, dessen als Durchbrüche kodierte Öffnungen mit Hilfe eins optischen Sensor 24 erfasst werden können.

Der Lenkwinkelsensor 2 ist in Figur 2 in einem fertigmontierten Zustand dargestellt. Es ist zu erkennen, dass das Zahnrad 14 und das weitere Zahnrad 10 in einer gemeinsamen, zum Träger 4 parallelen Ebene angeordnet sind und miteinander kämmen. Das Kodierelement 22 ist drehfest mit dem weiteren Zahnrad 10 verbunden und streckt sich in radialer Richtung über dieses weitere Zahnrad 10 hinaus, so dass es das Zahnrad 14 abschnittsweise überdeckt.

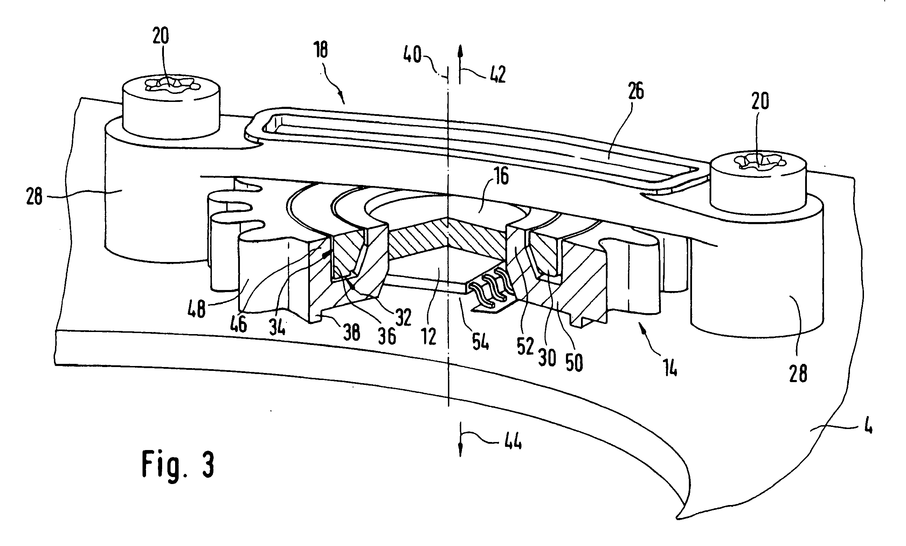

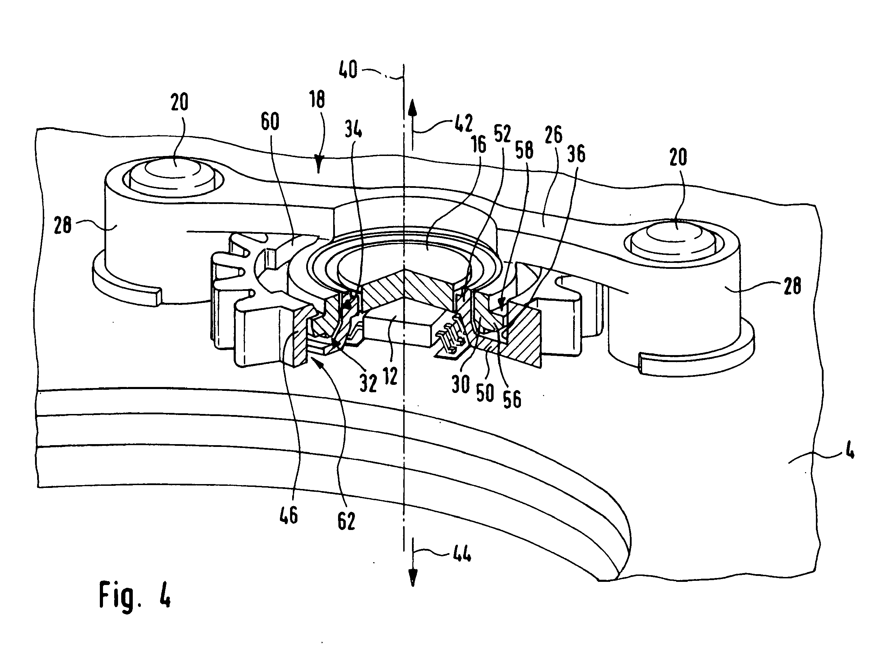

Die Lagerung des Zahnrads 14 wird im Folgenden genauer mit Bezug auf Figuren 3 und 4 beschrieben.

Das Lagerelement 18 weist ein vergleichsweise schmales und bogenförmig gekrümmtes Brückenteil 26 auf. Die Krümmung des Brückenteils 26 ist dem Verlauf des äußeren Umfangs des Kodierelements 22 angepasst (vergleiche Figur 2). An den Enden des Brückenteils 26 sind sich zu dem Träger 4 hin erstreckende zylindrische Materialabschnitte 28 vorgesehen, die von den bereits genannten Befestigungselementen 20 durchgriffen sind.

An dem Brückenteil 26 ist auf der dem Zahnrad 14 und dem Träger 4 zugewandten Seite ein ringförmiger Steg 30 angeformt. Dieser Steg weist auf seiner dem Träger 4 zugewandten Seite einen ringförmigen Lagerabschnitt 32 auf.

An diesen Lagerabschnitt schließt sich senkrecht zu diesem eine zylindrische Lagerfläche 34 an. Der Steg 30 greift in eine in dem Zahnrad 14 ausgebildete Ringnut 36 ein.

Das Zahnrad 14 trägt auf seiner dem Träger 4 zugewandten Seite einen ringförmigen Absatz 38, der an dem Träger 4 anliegt.

Mit der beschriebenen Lagerung kann das Zahnrad 14 um eine Drehachse 40 herum drehen, wobei eine Bewegung des Zahnrads 14 in einer ersten axialen Richtung 42 durch den Lagerabschnitt 32 verhindert wird. In einer zur ersten axialen Richtung 42 entgegengesetzten axialen Richtung 44 ist das Zahnrad 14 durch die Anlage des Trägers 4 an dem Absatz 38 blockiert. Mit Hilfe der Lagerfläche 34, die in Anlage mit einer Wandung der Ringnut 36 steht, ist das Zahnrad 14 in radialer Richtung geführt.

Das Zahnrad 14 weist eine in etwa zylindrische Außenwand 46 auf, an deren Außenseite Zähne 48 angeordnet sind. An die Außenwand 46 schließt sich nach radial innen ein etwa scheibenförmig ausgebildeter Materialabschnitt 50 an, der in eine Innenwand 52 übergeht. Der Magnet 16 ist an der Innenwand 52 durch Einpressen oder durch eine Rastverbindung gesichert. Zwischen dem Magnet 16 und dem Träger 4 ist ein Hohlraum 54 ausgebildet, in dem der Magnetsensor 12 angeordnet ist.

Mit weiterem Bezug auf Figur 4 wird eine weitere Ausführungsform der Lagerung des Zahnrads 16 beschrieben. Dabei tragen funktionsgleiche Bauteile die mit Bezug auf die vorstehend beschriebenen Figuren bereits genannten Bezugszeichen.

Auch das in Figur 4 dargestellte Lagerelement 18 weist ein Brückenteil 26 auf, dessen Enden 28 mit als Stiften ausgebildeten Befestigungselementen 20 an dem Träger 4 befestigt sind. Einstückig mit dem Brückenteil 26 ist ein ringförmiger Steg 30 ausgebildet, der im Unterschied zu der in Figur 3 dargestellten Ausführungsform eine sich radial nach außen erstreckende Schulter 56 trägt. Diese Schulter 56 weist eine von dem Träger 4 abgewandte und dem Brückenteil 26 zugewandte, ringförmige Schulterfläche 58 auf. Diese Schulterfläche 58 wirkt mit der Unterseite von Rastkörpern 60 zusammen, die an dem Zahnrad 14 ausgebildet sind und dort an der Außenwand 46 angeformt sind. Die Rastkörper 60 weisen nach radial innen. Sie erstrecken sich jeweils über einen begrenzten Winkelbereich. Um den Steg 30 in die in dem Zahnrad 14 ausgebildete Ringnut 36 einzuführen, wird der Steg 30 in die Ringnut 36 eingerastet, so dass die Rastkörper 60 in Anlage mit der Schulterfläche 58 gelangen. Um dieses Einrasten zu erleichtern, weist der Materialabschnitt 50 des Zahnrads 14 Materialdurchbrüche 62 auf, so dass sich die Außenwand 46 und die Innenwand 52 des Zahnrads 14 geringfügig relativ zueinander verformen können.

Mit der in Figur 4 beschriebenen Lagerung kann auf den in Figur 3 dargestellten Absatz 38 des Zahnrads 14 verzichtet werden. Die Blockierung der Bewegung des Zahnrads 14 in der mit 44 bezeichneten axialen Richtung erfolgt also nicht durch Kontakt des Absatzes 38 mit dem Träger 4, sondern über den Kontakt der Rastkörper 60 mit der Schulterfläche 58.

## Patentansprüche

1. Lenkwinkelsensor (2), mit einem Träger (4) zur Anordnung eines benachbart zu einem Zahnrad (14) angeordneten Magnetsensors (12), wobei das Zahnrad (14) einen mehrpoligen Magneten (16) aufweist und wobei an dem Träger (4) ein Lagerelement (18) angeordnet ist, das das Zahnrad (14) zumindest abschnittsweise überbrückt, einen Lagerabschnitt (32), der einen in einer ersten axialen Richtung (42) wirkenden Anschlag für das Zahnrad (14) bildet, und eine Lagerfläche (34) zur Führung des Zahnrads (14) in radialer Richtung aufweist, **dadurch gekennzeichnet, dass** der Lagerabschnitt (32) und/oder die Lagerfläche (34) an einem an dem Lagerelement (18) vorgesehenen ringförmigen Steg (30) ausgebildet ist oder sind, der in eine an oder in dem Zahnrad (14) ausgebildete Ringnut (36) eingreift, oder dass der Lagerabschnitt (32) und/oder die Lagerfläche (34) in einer in dem Lagerelement (18) vorgesehenen Ringnut ausgebildet ist oder sind, in die ein an dem Zahnrad (14) ausgebildeter ringförmiger Steg eingreift.

2. Lenkwinkelsensor (2) nach Anspruch 1, **dadurch gekennzeichnet, dass** der ringförmige Steg (30) eine sich in radialer Richtung erstreckende Schulter (56) trägt, die einen in einer zweiten axialen Richtung (44) wirkenden Anschlag für das Zahnrad (14) bildet, die zur ersten axialen Richtung (42) entgegengesetzt ist.

3. Lenkwinkelsensor (2) nach Anspruch 1 oder 2, **dadurch gekennzeichnet, dass** das Zahnrad (14) auf seiner dem Träger (2) zugewandten Seite einen vorzugsweise ringförmigen Absatz (38) trägt.

4. Lenkwinkelsensor (2) nach mindestens einem der vorhergehenden Ansprüche, **dadurch gekennzeichnet, dass** der Lagerabschnitt (32) und/oder die Lagerfläche (34) und/oder die Ringnut (36) und/oder der ringförmige Steg (30) und/oder die Schulter (56) und/oder der Absatz (38) aus einem selbstschmierenden Material, insbesondere aus Polytetrafluorethylen (PTFE) gebildet sind.

5. Lenkwinkelsensor (2) nach mindestens einem der vorhergehenden Ansprüche, **dadurch gekennzeichnet, dass** zur Anordnung des Lagerabschnitts (32) und/oder der Lagerfläche (34) und/oder der Ringnut (36) und/oder des ringförmigen Stegs (30) an dem Lagerelement (18) ein Brückenteil (26) vorgesehen ist, das mit zumindest einem seiner Enden an dem Träger (4) befestigt ist.

6. Lenkwinkelsensor (2) nach Anspruch 5, **dadurch gekennzeichnet, dass** an den Enden des Brückenteils zylindrische Materialabschnitte (28) vorgesehen sind.

7. Lenkwinkelsensor (2) nach Anspruch 6, **dadurch gekennzeichnet, dass** die zylindrischen Materialabschnitte (28) in hohlzylindrischen Aufnahmen eingreifen, die in oder an dem Träger (4) vorgesehen sind.

8. Lenkwinkelsensor (2) nach Anspruch 6 oder 7, **dadurch gekennzeichnet, dass** die zylindrischen Materialabschnitte (28) von Schrauben (20) und/oder Dübeln und/oder Stiften (20) durchsetzt sind.

9. Lenkwinkelsensor (2) nach mindestens einem der Ansprüche 5 bis 8, **dadurch gekennzeichnet, dass** das Brückenteil (26) exzentrisch zur Drehachse (40) des Zahnrads (14) angeordnet ist.

10. Lenkwinkelsensor (2) nach mindestens einem der Ansprüche 5 bis 9, **dadurch gekennzeichnet, dass** das Brückenteil (26) in einer zur Drehebene des Zahnrads (14) parallelen Ebene bogenförmig ausgebildet ist.

11. Lenkwinkelsensor (2) nach mindestens einem der vorhergehenden Ansprüche, **dadurch gekennzeichnet, dass** das Zahnrad (14) mit einem weiteren Zahnrad (10) kämmt, dessen Drehbewegung mit der Lenkwelle eines Kraftfahrzeuglenksystems koppelbar ist, wobei das weitere Zahnrad mit einem Kodierelement (22) zumindest mittelbar drehgekoppelt ist.

12. Lenkwinkelsensor (2) nach Anspruch 10 und 11, **dadurch gekennzeichnet, dass** die Bogenform des Brückenteils (26) dem Verlauf des Umfangs des Kodierelements (22) angepasst ist.

13. Lenkwinkelsensor (2) nach mindestens einem der vorhergehenden Ansprüche, **dadurch gekennzeichnet, dass** der Träger (4) als Platine des Lenkwinkelsensors (2) ausgebildet ist.

14. Lenkwinkelsensor (2) nach mindestens einem der Ansprüche 1 bis 13, **dadurch gekennzeichnet, dass** der Träger als Gehäuseabschnitt eines Gehäuses des Lenkwinkelsensors (2) ausgebildet ist.

## Claims

1. A steering angle sensor (2), having a support (4) for arranging a magnetic sensor (12) arranged adjacent to a gear wheel (14), wherein the gear wheel (14) has a multipole magnet (16), and wherein a seating element (18) is arranged on the support (4), which at least partially bridges the gear wheel (14), constitutes a seating section (32) which forms a stop acting in a first axial direction (42) for the gear wheel (14), and a seating surface (34) for guiding the gear wheel (14) in the radial direction, **characterized in that** the seating section (32) and/or the seating surface (34) is/are formed on an ring-shaped strip (30) provided on the seating element (18), which engages an annular groove (36) formed on or in the gear wheel (14), or that the seating section (32) and/or the seating surface (34) is/are formed in an annular groove provided in the seating element (18), which is engaged by a ring-shaped strip formed on the gear wheel (13).

2. The steering angle sensor (2) in accordance with claim 1, **characterized in that** the ring-shaped strip (30) has a shoulder (56) extending in the radial direction, which constitutes a stop for the gear wheel (14), which acts in a second axial direction (44) extending opposite the first axial direction (42).

3. The steering angle sensor (2) in accordance with claim 1 or 2, **characterized in that,** on its side facing the support (2), the gear wheel (14) has a preferably ring-shaped shoulder (38).

4. The steering angle sensor (2) in accordance with at least one of the preceding claims, **characterized in that** the seating section (32), and/or the seating surface (34), and/or the annular groove (36), and/or the ring-shaped strip (30), and/or the shoulder (56), and/or the shoulder (38) are formed of a self- lubricating material, in particular of polytetrafluoroethylene (PTFE).

5. The steering angle sensor (2) in accordance with at least one of the preceding claims, **characterized in that** for the arrangement of the seating section (32), and/or the seating surface (34), and/or the annular groove (36), and/or the ring- shaped strip (30) on the seating element (18), a bridge element (26) is provided, which is fastened with at least one of its ends on the support (4).

6. The steering angle sensor (2) in accordance with claim 5, **characterized in that** cylindrical material sections (28) are provided at the ends of the bridge element.

7. The steering angle sensor (2) in accordance with claim 6, **characterized in that** the cylindrical material sections (28) engage hollow-cylindrical receptacles provided in or on the support (4).

8. The steering angle sensor (2) in accordance with claim 6 or 7, **characterized in that** screws (20), and/or dowels, and/or pins (20) penetrate through the cylindrical material sections (28).

9. The steering angle sensor (2) in accordance with at least one of claims 5 to 8, **characterized in that** the bridge element (26) is arranged eccentrically in respect to the axis of rotation (40) of the gear wheel (14).

10. The steering angle sensor (2) in accordance with at least one of claims 5 to 9, **characterized in that** in a plane extending parallel in respect to the plane of rotation of the gear wheel (14), the bridge element (26) is embodied in a curved shape.

11. The steering angle sensor (2) in accordance with at least one of the preceding claims, **characterized in that** the gear wheel (14) meshes with a further gear wheel (10), whose rotating movement can be coupled with the steering shaft of a motor vehicle steering system, wherein the further gear wheel (10) is at least indirectly rotatingly coupled with a coding element (22).

12. The steering angle sensor (2) in accordance with claim 10 and 11, **characterized in that** the curved shape of the bridge element (26) is matched to the course of the circumference of the coding element (22).

13. The steering angle sensor (2) in accordance with at least one of the preceding claims, **characterized in that** the support (14) is embodied as a plate of the steering angle sensor (2).

14. The steering angle sensor (2) in accordance with at least one of claims 1 to 13, **characterized in that** the support is embodied as a housing section of a housing of the steering angle sensor (2).

## Revendications

1. Capteur d'angle de braquage (2), comprenant un support (4) pour disposer un capteur magnétique (12) disposé de façon adjacente à une roue dentée (14), dans lequel la roue dentée (14) présente un aimant multipolaire (16), et dans lequel sur le support (4) un élément de palier (18) est disposé qui surmonte la roue dentée (14) au moins sur une portion, une portion de palier (32) qui forme une butée agissant dans une première direction axiale (42) pour la roue dentée (14), et une surface de palier (34) pour guider la roue dentée (14) dans la direction radiale,
**caractérisé en ce que** la portion de palier (32) et/ou la surface de palier (34) est/sont réalisée(s) sur une entretoise annulaire (30) prévue au niveau de l'élément de palier (18) et qui s'engage dans une rainure annulaire (36) réalisée sur ou dans la roue dentée (14), ou
**en ce que** la portion de palier (32) et/ou la surface de palier (34) est ou sont réalisée(s) dans une rainure annulaire prévue dans l'élément de palier (18), dans laquelle s'engage une entretoise annulaire réalisée sur la roue dentée (14).

2. Capteur d'angle de braquage (2) selon la revendication 1, **caractérisé en ce que** l'entretoise annulaire (30) porte un épaulement (56) s'étendant dans la direction radiale qui forme une butée agissant dans une deuxième direction axiale (44) qui est opposée à la première direction axiale (42).

3. Capteur d'angle de braquage (2) selon la revendication 1 ou 2, **caractérisé en ce que** la roue dentée (14) porte sur son côté tourné vers le support (2) un gradin (38) de préférence annulaire.

4. Capteur d'angle de braquage (2) selon au moins l'une quelconque des revendications précédentes, **caractérisé en ce que** la portion de palier (32) et/ou la surface de palier (34) et/ou la rainure annulaire (36) et/ou l'entretoise annulaire (30) et/ou l'épaulement (56) et/ou le gradin (38) sont réalisés à partir d'un matériau autolubrifiant, en particulier à partir de polytétrafluoréthylène (PTFE).

5. Capteur d'angle de braquage (2) selon au moins l'une quelconque des revendications précédentes, **caractérisé en ce que** pour l'agencement de la portion de palier (32) et/ou de la surface de palier (34) et/ou de la rainure annulaire (36) et/ou de l'entretoise annulaire (30) sur l'élément de palier (18), une pièce formant pont (26) est prévue qui est fixée par au moins l'une de ses extrémités au support (4).

6. Capteur d'angle de braquage (2) selon la revendication 5, **caractérisé en ce qu'**aux extrémités de la pièce formant pont, des portions de matériau cylindriques (28) sont prévues.

7. Capteur d'angle de braquage (2) selon la revendication 6, **caractérisé en ce que** les portions de matériau cylindriques (28) s'engagent dans des logements cylindriques creux qui sont prévus dans ou sur le support (4).

8. Capteur d'angle de braquage (2) selon la revendication 6 ou 7, **caractérisé en ce que** les portions de matériau cylindriques (28) sont traversées par des vis (20) et/ou des goujons et/ou des chevilles (20).

9. Capteur d'angle de braquage (2) selon au moins l'une quelconque des revendications 5 à 8, **caractérisé en ce que** la pièce formant pont (26) est disposée de façon excentrique par rapport à l'axe de rotation (40) de la roue dentée (14).

10. Capteur d'angle de braquage (2) selon au moins l'une quelconque des revendications 5 à 9, **caractérisé en ce que** la pièce formant pont (26) est réalisée en forme d'arc dans un plan parallèle au plan de rotation de la roue dentée (14).

11. Capteur d'angle de braquage (2) selon au moins l'une quelconque des revendications précédentes, **caractérisé en ce que** la roue dentée (14) s'engrène avec une autre roue dentée (10) dont le mouvement rotatif peut être couplé avec l'arbre de direction d'un système de direction de véhicule automobile, dans lequel la roue dentée supplémentaire est au moins indirectement couplée en rotation avec un élément de codage (22).

12. Capteur d'angle de braquage (2) selon les revendications 10 et 11, **caractérisé en ce que** la forme d'arc de la pièce formant pont (26) est adaptée au tracé de la circonférence de l'élément de codage (22).

13. Capteur d'angle de braquage (2) selon au moins l'une quelconque des revendications précédentes, **caractérisé en ce que** le support (4) est réalisé comme une platine du capteur d'angle de braquage (2).

14. Capteur d'angle de braquage (2) selon au moins l'une quelconque des revendications 1 à 13, **caractérisé en ce que** le support est réalisé comme une portion de boîtier d'un boîtier du capteur d'angle de braquage (2).
